# EUROPÄISCHE PATENTANMELDUNG

(11) **EP 1 523 956 A2**
(43) Veröffentlichungstag der Anmeldung: **20.04.2005**
(21) Anmeldenummer: 04405624.0
(22) Anmeldetag: 05.10.2004
(51) Int. Cl.: A61C 8/00

(54) **Vorrichtung zur Bildung von Gewebe und Zellkulturen, insbesondere Knochenregeneration mittels Distraktion**

(30) Priorität: 06.10.2003 US 678059
(71) Anmelder: CelGen AG, 6300 Zug (CH)
(72) Erfinder: Horvath, Domonokos, 79798 Jestetten (DE)
(74) Vertreter: Groner, Manfred

(57) **Zusammenfassung**

Die Vorrichtung weist eine strukturstabile Membran (4, 4', 34, 35) auf, die eine Oberfläche (15) besitzt, die insbesondere mit einem zu regenerierenden Gewebe und insbesondere vitalen Knochen (2, 22, 38, 39) zu verbinden ist. Weiter sind Mittel (9, 5, 6, 25, 36) vorgesehen, mit denen die Membran (4, 4', 24, 35) zur Bildung von Zellen, Gewebe und insbesondere zur Kallusdistraktion mit einer bestimmten Zugkraft und Geschwindigkeit bewegbar ist. Erfindungsgemäss weist die Membran (4, 4', 24, 35) an der den Zellen, dem Gewebe bzw. Knochen zugewandten Oberfläche Mittel (16) zur biologischen Verankerung und Haftung für Zellen, Gewebe bzw. Knochenzellen auf. Diese Mittel (16) zur biologischen Verankerung von Gewebezellen sind insbesondere Knochenzellen, Eiweissmoleküle und/oder Osteoblasten (17) sowie Vertiefungen (45, 46, 48) und Oberflächenspitzen (50) der Membran.

## Beschreibung

Die Erfindung betrifft eine Vorrichtung nach dem Oberbegriff des Anspruchs 1.

Verfahren zur Knochenregeneration mittels Kallusdistraktion sind seit langem bekannt. So wird die Kallusdistraktion auch zum Aufbau des Kieferkammes verwendet. Durch progressive Distraktion von Knochensegmenten wird die Knochenneubildung stimuliert. Damit kann beispielsweise in einem Kieferkamm ein Knochenlager für die Aufnahme eines Implantationskörpers geschaffen werden. Es ist bekannt, dass die Knochenneubildung mit einer wesentlichen Vermehrung von Osteoblasten, extrazellulärem Kollagen und Osteoiden erfolgt. Als Kallus wird das im Verlauf einer Frakturheilung gebildete temporäre Gewebe bezeichnet. Für den Aufbau von Knochengewebe sind die Osteoblasten verantwortlich, die einen Durchmesser von etwa 20 Mikrometer besitzen. Die Osteoblasten bilden eine organische Grundsubstanz aus Kollagen, die anschliessend verkalkt. Bekannt ist auch die Extremitätenverlängerung mittels Kallusdistraktion. Hierbei werden Knochenfragmente mit beispielsweise 1 Millimeter pro Tag distrahiert. Nach der Distraktion erfolgt eine Konsolidierungsphase, in welcher sich der während der Distraktion weiche Kallus verhärtet.

Durch die WO 01/91 663 des Anmelders ist eine Vorrichtung zur Knochenregeneration mittels Kallusdistraktion bekannt geworden, bei welcher an den zu regenerierenden Knochen eine Membran angelegt und der sich gebildete Kallus mechanisch beansprucht wird. Die Vorrichtung weist Zugmittel auf, mit denen eine einstellbare Zugspannung auf die Membran ausgeübt und damit eine Knochenregeneration durch Kallusdistraktion induziert wird. Bei der Kallusdistraktion wird mit dieser Vorrichtung ein Kallus zwischen dem zu regenerierenden Knochen und der Membran gedehnt. Die Membran wird mit einer bestimmten Geschwindigkeit bewegt, die beispielsweise 1 Millimeter pro Tag beträgt. Die Geschwindigkeit ist so eingestellt, dass sich bei der Distraktion ein weicher Kallus bilden kann, der sich anschliessend in einen qualitativ befriedigenden Knochen umwandelt. Ist die Geschwindigkeit der Distraktion zu schnell, so bildet sich ein qualitativ minderwertiger Kallus und entsprechend ein wenig stabiler Knochen. Erfolgt die Distraktion zu langsam, so verhärtet der Kallus und die Membran kann nicht mehr bewegt werden, so dass die Distraktion nicht mehr weitergeführt werden kann. Die Membran ist auf einer dem Knochen zugewandten Oberfläche aufgerauht, um eine Verbindung mit einem darunter liegenden Knochen zu erlauben. Eine dem Knochen abgewandte Oberfläche ist ebenfalls aufgerauht, um ein Ablösen der Membran von einem bedeckenden Bindegewebe zu verhindern.

Durch die FR-2 753 366 A ist ein Kieferimplantat bekannt geworden, an dem eine resorbierbare Membran befestigt ist, welche eine das Implantat aufnehmende Ausnehmung eines Knochens abdeckt. Die Membran soll eine Knochenregeneration ermöglichen. Eine Kallusdistraktion findet jedoch nicht statt.

Die EP 0 475 077 offenbart eine Membran zur Knochenregeneration, die ein resorbierbares oder abbaubares Polymer- und/oder Polymerkeramikmaterial enthält. Die Membran dient zur Bildung von Kallus an einem Knochen. Eine Kallusdistraktion findet auch in diesem Fall nicht statt.

Obwohl die ausserordentliche Bedeutung der Knochenregeneration durch Kallusdistraktion insbesondere für die Paradontologie seit langem bekannt ist, konnte sich diese mit Hilfe der Kallusdistraktion in der Praxis jedoch noch nicht durchsetzen.

Der Erfindung liegt die Aufgabe zugrunde, eine Vorrichtung, eine Membran und ein Verfahren zu schaffen, die eine noch einfachere und sicherere Bildung von Gewebe und Zellkulturen und insbesondere Knochenregeneration durch Distraktion ermöglicht. Die Erfindung soll insbesondere die Knochenregeneration auf dem Gebiet der Paradontologie ermöglichen.

Die Erfindung ist bei einer gattungsgemässen Vorrichtung gemäss Anspruch 1 gelöst. Die genannten Mittel zur biologischen Haftung von Osteoblasten verbessern die Verankerung des Kallus an der Membran wesentlich. Durch diese erhöhte Haftung und damit Verankerung des Kallus an der Membran besteht eine wesentlich höhere Sicherheit, dass die Membran bei der Distraktion nicht vom Kallus abgerissen wird. Dadurch ist es auch möglich, den Kallus mit den gleichen Kräften wie zwischen zwei Knochenendstücken zu dehnen. Die Erfindung ist nicht allein auf die Bildung bzw. Regeneration von Knochengewebe beschränkt, sondern für jede Art von Gewebe und Zellkulturen geeignet. Und zwar, besonders dort, wo Zellproliferation und Differenzierung durch biomechanische Reizübertragung am Zytoskelett ausgelöst und Zellwachstum bzw. Gewebswachstum erzielt werden kann, wie beispielsweise an einem Endothel.

Die Mittel zur biologischen Haftung von Osteoblasten sind gemäss einer Weiterbildung der Erfindung Ankerproteine, die an der Membran befestigt sind. Eiweissmoleküle und insbesondere kurzkettige Eiweissmoleküle eignen sich besonders zur Haftung bzw.

Verankerung von Osteoblasten. Die Haftung beruht auf einer Adhäsion zwischen den Eiweissmolekülen und den Osteoblasten. Die Eiweissmoleküle erstrecken sich vorzugsweise über die ganze Oberfläche, welche dem zu regenerierenden Knochen zugewandt ist. Grundsätzlich sind auch andere Mittel, insbesondere organische Moleküle denkbar, welche die genannte Haftung gewährleisten.

Nach einer Weiterbildung der Erfindung ist vorgesehen, dass auf der dem Gewebe zugewandten Oberfläche der Membran Osteoblasten angesiedelt sind, die an die genannten Mittel zur biologischen Haftung verankert sind. Die Membran ist bei dieser Ausführungsvariante somit bereits mit Osteoblasten besiedelt. Wird die Membran an einen zu regenerierenden Knochen angelegt, so kann sich dadurch besonders schnell ein Kallus aufbauen, welcher an der Membran durch Adhäsion verankert ist. Die Osteoblasten sind hier vorzugsweise an kurzkettigen Eiweissmolekülen durch Adhäsion verankert.

Die Mittel zur Bewegung der Membran und somit die Distraktoren sind nach einer Weiterbildung der Erfindung mechanische Zugoder Druckmittel. Nach einer Weiterbildung der Erfindung weisen die Mittel zum Bewegen der Membran wenigstens einen Magnet auf, mit dem auf die Membran eine Kraft und insbesondere eine Zugkraft ausgeübt wird. Die Membran ist hierzu mit ferromagnetischem Material versehen, das vom Magneten angezogen wird. Der Magnet ist vorzugsweise im Abstand zur Membran befestigt, beispielsweise an einem Zahn oder an einem Implantat.

Die Erfindung betrifft zudem eine Membran zur Bildung von Gewebe und Zellen in Zellkulturen und insbesondere für Geweberegeneration und insbesondere die Knochenregeneration mittels Kallusdistraktion, wobei diese Membran für den Austausch von Nährstoffen durchlässig ist und eine Oberfläche aufweist, die an ein zu regenerierendes Gewebe anzulegen und zur Regeneration zu bewegen ist. Diese Membran ist also dadurch gekennzeichnet, dass die genannte Oberfläche Mittel zur biologischen Haftung von Osteoblasten aufweist.

Die Membran ist gemäss einer Weiterbildung der Erfindung vergleichsweise starr, so dass sie im Wesentlichen ohne Deformation eine Zugspannung auf ein Gewebe ausüben kann.

Nach einer Weiterbildung der Erfindung weist die Membran einen Träger auf, der vorzugsweise aus Metall, beispielsweise aus Titan hergestellt ist. Dieser Träger ist vorzugsweise offenporig oder bildet ein Gitter bzw. ein Netz, das zur Erneuerung des Kallus insbesondere für Serum durchlässig ist.

Ein besonders vorteilhafter Aufbau der Membran ergibt sich dann, wenn gemäss einer Weiterbildung der Erfindung der Träger auf einer Oberfläche mit einer folienartigen Schicht versehen ist, welche für den Austausch von Nährstoffen durchlässig ist. An dieser Schicht sind im Bereich der Durchbrüche des Trägers ebenfalls Mittel zur biologischen Haftung von Osteoblasten angeordnet. Damit kann die gesamte dem zu regenerierenden Knochen zugewandte Oberfläche der Membran mit dem genannten Mittel zur biologischen Haftung versehen werden. Dadurch ergibt sich eine besonders hohe Haftung des Kallus an der Membran.

Die Erfindung betrifft zudem ein Verfahren zur Bildung von Gewebe und Zellen in Zellkulturen und insbesondere zur Geweberegeneration und insbesondere Knochenregeneration, wobei eine für den Austausch von Nährstoffen durchlässige Membran mit einem zu regenerierenden Gewebe bzw. Zellen und insbesondere vitalem Knochen verbunden und zur Regeneration bewegt wird. Das Verfahren ist erfindungsgemäss dadurch gekennzeichnet, dass die dem Gewebe oder den Zellen bzw. dem Knochen zugewandte Oberfläche der Membran Mittel zur biologischen Haftung von Zellen und insbesondere von Osteoblasten aufweist, und dass die Membran an die zu bildende Stelle angelegt wird, so dass sich Zellen mit den genannten Mitteln der Membran verbinden und dass anschliessend zur Zellbildung die Membran mit einer bestimmten Geschwindigkeit von der genannten Stelle wegbewegt wird.

Nach einer Weiterbildung des erfindungsgemässen Verfahrens ist vorgesehen, dass die Membran vor dem Anlegen auf der den Zellen zugewandten Oberfläche mit Zellen und insbesondere Osteoblasten versehen wird. Diese Zellen bzw. Osteoblasten beschleunigen beim Anlegen der Membran beispielsweise an das Gewebe bzw. den Knochen die Kallusbildung. Zudem kann eine besonders hohe Haftung der Membran am Kallus erreicht werden. Bei der Distraktion wird die Membran mit einer Geschwindigkeit von 0,5 bis 2 Millimeter im Tag und vorzugsweise mit etwa 1 Millimeter pro Tag vom Knochen weg bewegt. Nach der Beendigung der Kallusdistraktion erfolgt eine Konsolidierungsphase, während welcher der Kallus sich in Knochen umwandelt.

Zur Knochenregeneration bzw. Knochenneubildung wird erfindungsgemäss eine Membran verwendet, die für den vitalen und zu regenerierenden Knochen im Wesentlichen wie ein zweiter vitaler Knochen erscheint. Die Kallusbildung zwischen der Membran und dem zu regenerierenden vitalen Knochen entspricht damit weitgehend einer Kallusdistraktion zwischen zwei vitalen Knochen.

Ausführungsbeispiele der Erfindung werden nachfolgend anhand der Zeichnung näher erläutert. Es zeigen:
- Fig. 1: schematisch einen Schnitt durch einen zu regenerierenden vitalen Knochen und eine erfindungsgemässe Membran,
- Fig. 2: schematisch einen Schnitt durch einen vitalen Knochen und eine Membran gemäss einer Variante,
- Fig. 3: schematisch einen Schnitt durch einen vitalen Knochen und eine erfindungsgemässe an diesen angelegte Membran,
- Fig. 4: eine schematische Darstellung gemäss Fig. 3, jedoch zeitlich später nach einer Kallusbildung,
- Fig. 5: schematisch einen Schnitt durch eine erfindungsgemässe Vorrichtung zur Knochenregeneration am Beispiel einer Knochenregeneration in einem Zahnbereich,
- Fig. 6: eine schematische Darstellung gemäss Fig. 5, jedoch mit einer Variante der erfindungsgemässen Einrichtung,
- Fig. 7: schematisch eine räumliche Ansicht einer erfindungsgemässen Vorrichtung und ein Knochen, der mit dieser Vorrichtung regeneriert wird,
- Fig. 8: eine Ansicht gemäss Figur 7, jedoch nach erfolgter Regeneration,
- Fig. 9: schematisch eine räumliche Ansicht einer weiteren Variante der erfindungsgemässen Vorrichtung und ein Knochen, der mit dieser Vorrichtung regeneriert wird,
- Fig. 10: eine Ansicht nach Figur 9, jedoch nach erfolgter Regeneration,
- Fig. 11-13: schematisch die unterschiedlichen Strukturen der Membran und
- Fig. 14: schematisch ein stark vergrösserter Schnitt durch die erfindungsgemässe Membran.

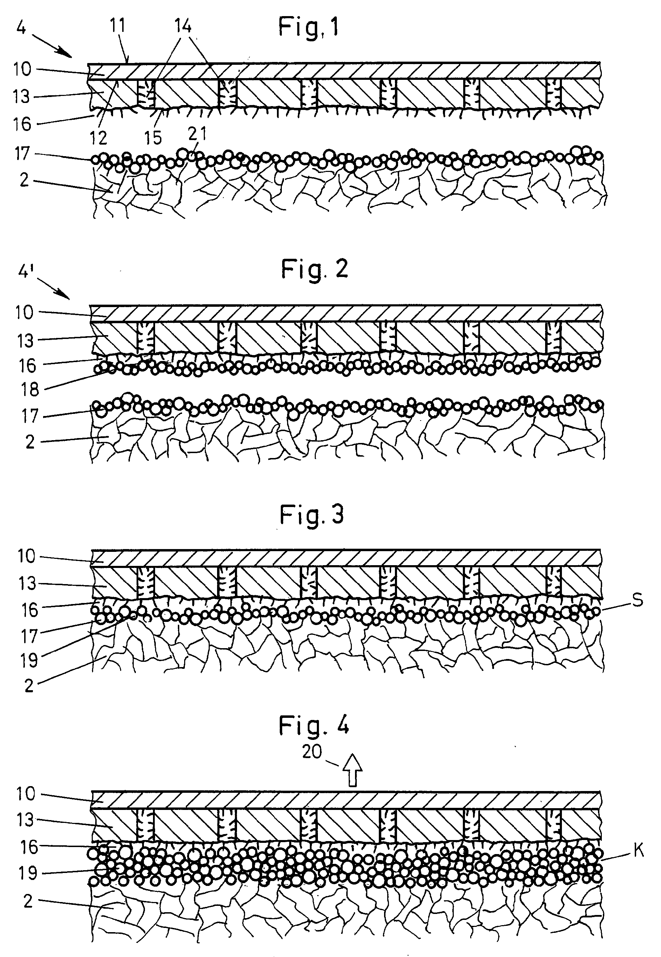

Die Fig. 1 zeigt einen vitalen Knochen 2, der an einer Oberfläche 21 mittels Kallusdistraktion zu regenerieren ist. Der vitale Knochen 2 soll insbesondere an der Oberfläche 21 zur Knochenneubildung angeregt werden. Der Knochen 2 ist irgend ein vitaler Knochen, der für eine Kallusdistraktion geeignet ist, beispielsweise ist der vitale Knochen 2 ein solcher in einem Zahnbereich.

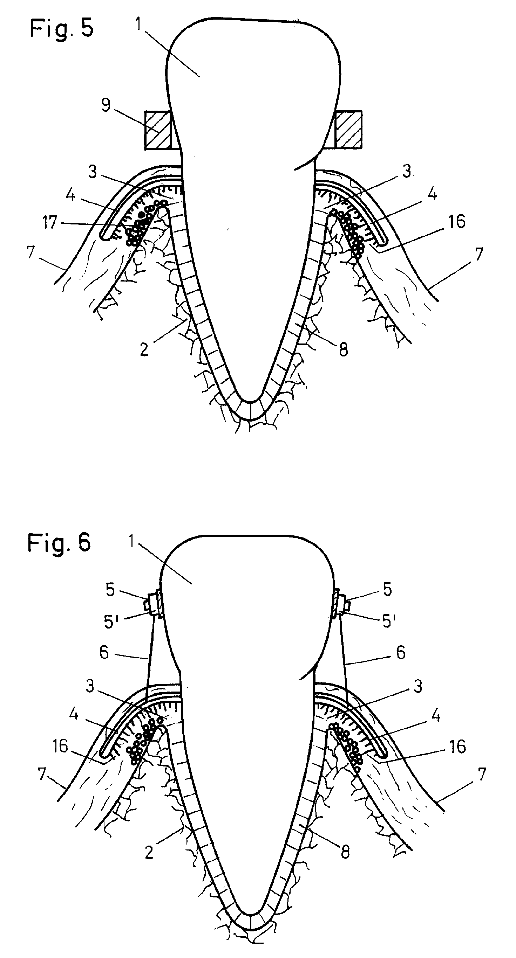

Die Membran 4 besitzt eine flächige, scheibenförmige Form, welche an die Oberfläche 21 des vitalen Knochens 2 angepasst und im Zahnfleisch eingebettet ist. Die Membran 4 kann somit wie gezeigt eben oder räumlich geformt sein, wie dies beispielsweise in den Fig. 5 und 6 gezeigt ist. Die Membran 4 ist weitgehend formbeständig und beispielsweise durch Einlagen oder Verstärkungsrippen stabilisiert, so dass auf diese ohne wesentliche Deformation eine Kraft, insbesondere eine Zugkraft oder ein Druck ausgeübt werden kann. Es wird hierzu auf die WO 01/91 663 A1 des Anmelders hingewiesen.

Die Membran 4 besitzt eine flächige Schicht 10, die für Nährflüssigkeit und insbesondere Serum durchlässig ist. Die Schicht 10 ist insbesondere offenporig und besitzt eine Dicke, die sich nach den strukturellen Anforderungen der jeweiligen Anwendung richtet. Diese Dicke liegt in der Regel im Bereich von 0,1 bis 2 Millimeter. Die hier nicht gezeigten Poren sind Mikroporen, die so weit sind, dass sie den Durchgang von Nährstoffen einer Nährflüssigkeit ermöglichen. Ein wesentlicher Anteil dieser Poren besitzt vorzugsweise einen Durchmesser von weniger als etwa 500 Mikrometer.

Die Schicht 10 ist flächig mit einem Träger 13 verbunden, der beispielsweise eine Platte oder ein Gitter oder Netz aus einem geeigneten Metall, insbesondere Titan ist. Der Träger 13 weist eine Mehrzahl von Durchgängen 14 auf, die bei einer plattenförmige Ausbildung Perforationen sind. Diese Durchgänge 14 ermöglichen den Durchgang von Nährflüssigkeit, die von einer Oberseite 11 her die Membran 4 durchdringen und zu einer Oberfläche 15 gelangen kann. Die Nährflüssigkeit ist insbesondere ein Serum. Die untere Grenze des Durchmessers dieser Durchgänge 14 liegt im Bereich von 5 µm bis 25 µm. Der Träger 13 kann auch in die Schicht 10 integriert sein. Grundsätzlich ist aber auch eine Ausführung denkbar, bei welcher der Träger 13 nicht vorhanden und die Schicht 10 durch andere geeignete Mittel stabilisiert ist. Denkbar ist beispielsweise eine Stabilisierung durch chemische Oberflächenhärtung.

Die Membran 4 weist eine dem vitalen Knochen 2 zugewandte Oberfläche 15 auf. Auf diese Oberfläche 15 sind Mittel 16 zur biologischen Haftung von Osteoblasten 17 aufgebracht. Diese Mittel 16 weisen beispielsweise kurzkettige Eiweissmoleküle auf, die 1 bis 30 Kohlestoffatome besitzen. Die Mittel 16 erstrecken sich vorzugsweise über die gesamte Oberfläche 15 und zudem in die Durchgänge 14. In diesen Durchgängen 14 sind diese Mittel 16 ebenfalls an der Innenseite der Schicht 10 angebracht. Die Mittel 16 sind somit im Bereich der Durchgänge 14 auch an einer inneren Oberfläche 12 der Schicht 10 angeordnet. Die Mittel 16 sind infolge der Offenporigkeit der Schicht 10 und über die Durchgänge 14 mit Nährstoffen versorgt. Bei einer Ausführung, bei welcher der Träger 13 nicht vorgesehen ist, sind die Mittel 16 direkt auf die Oberfläche 12 aufgebracht.

Die Fig. 2 zeigt eine Membran 4', die ausser den oben erwähnten Merkmalen zusätzlich noch Osteoblasten 18 aufweist, die an den genannten Mitteln 16 durch Adhäsion haften. Die Osteoblasten 18 haften somit beispielsweise an den genannten kurzkettigen Eiweissmolekülen. Die Osteoblasten 18 können auch durch andere geeignete Zellen ersetzt oder ergänzt sein.

Nachfolgend wird die Verwendung der Membran 4 bzw. 4' sowie das Verfahren zur Kallusdistraktion mit diesen Membranen näher erläutert.

Um den Knochen 2 zu regenerieren bzw. zur Neubildung von Knochen anzuregen, wird die Membran 4 bzw. 4' gemäss Fig. 3 mit der Oberfläche 15 an den vitalen Knochen 2 angelegt. Zwischen dem vitalen Knochen 2 und der Membran 4 bildet sich dadurch eine Schicht S, die aus Osteoblasten 17 des vitalen Knochens 2 und Mitteln 16 der Membran 4 gebildet wird. Diese Schicht S wird aufgrund der Porosität der Schicht 10 und der Durchgänge 14 mit Nährstoffen versorgt. Diese Nährstoffe stammen beispielsweise aus einem hier nicht gezeigten Gewebe, das über der Membran 4 angeordnet ist. Wesentlich ist nun, dass sich die Osteoblasten 17 infolge Adhäsion sehr schnell mit den Mitteln 16, beispielsweise mit kurzkettigen Eiweissmolekülen verbinden. Dadurch ergibt sich sehr schnell eine vergleichsweise hohe Haftung der Membran 4 am vitalen Knochen 2. Im Fall der Membran 4' enthält die Schicht S zudem Osteoblasten 18 der Membran 4'. Diese Osteoblasten 18, die dem vitalen Knochen 2 somit über die Membran 4' zugeführt werden, verbessern ebenfalls die Haftung und beschleunigen die Kallusbildung. Die Membran 4' hat an der Oberfläche 15 im Wesentlichen die Eigenschaften eines vitalen Knochens. Der vitale Knochen 2 kann somit die Membran 4' kaum oder nicht von einem anderen vitalen Knochen unterscheiden.

Die Schicht S entwickelt sich durch die Vermehrung der Osteoblasten 17 bzw. 18 zu einem in Fig. 4 schematisch dargestellten Kallus K. Dieser Kallus K wird weiterhin mit Nährstoffen versorgt. Nun wird zur an sich bekannten Kallusdistraktion der Kallus K gedehnt, indem auf die Membran 4 in den Richtungen der Pfeile 20 eine Kraft ausgeübt wird. Durch diese Dehnung wird auf den Kallus K ein biologischer Reiz ausgeübt, der die Osteoblasten 17 und 18 und auch neu gebildete Osteoblasten 19 aktiviert. Durch die Bewegung der Membran 4 relativ zum vitalen Knochen 2 wird somit eine Knochenneubildung induziert. Die Geschwindigkeit, mit welcher die Membran 4 bewegt wird, ist vorzugsweise stetig und beträgt beispielsweise 0,5 bis 2 Millimeter im Tag. Aufgrund der genannten Adhäsion der Mittel 16 am vitalen Knochen wird bei der Kallusdistraktion und somit während der Bewegung der Membran 4 ein Ablösen der Membran 4 weitgehend verhindert. Die genannte Geschwindigkeit der Membran 4 ist so eingestellt, dass während der Kallusdistraktion der Kallus K sich ohne Verhärten entwickeln kann. Ist die Geschwindigkeit zu langsam, so verhärtet der Kallus K und die Membran 4 kann nicht mehr bewegt werden. Hat die Membran 4 die vorgesehene Endstellung erreicht, so wird diese nicht weiter bewegt. In einer anschliessenden Konsolidierungsphase wandelt sich der Kallus K durch Mineralisation in einen festen Knochen um. Die Entwicklung des Kallus K während der Kallusdistraktion und während der Konsolidierungsphase kann beispielsweise radiologisch oder durch Sonographie kontrolliert werden.

Die Fig. 5 und 6 zeigen beispielhaft eine Anwendung der erfindungsgemässen Membran 4 auf dem Gebiet der Paradontologie. Die Figuren zeigen einen Zahn 1, einen vitalen Knochen 2, paradontales Gewebe 3 sowie das Paradontium 8. Die Membran 4 ist wie oben erläutert ausgebildet und kann auch die Membran 4' sein. Sie befindet sich unterhalb des Zahnfleisches 7 im Bereich des vitalen Knochens 2, der im Bereich einer Läsion 3 regeneriert werden soll. Die genannten Mittel 16 sind an der Unterseite der Membran 4 bzw. 4' angeordnet und sind dem vitalen Knochen 2 zugewandt. Wie ersichtlich, ist die Membran 4 entsprechend der Form des Knochens 2 haubenförmig geformt. Die Kallusdistraktion erfolgt hier wie oben erläutert. Die Membran 4 wird in der Fig. 5 nach oben und damit vom vitalen Knochen 2 weg bewegt. Zur Ausübung der erforderlichen Kraft auf die Membran 4 ist am Zahn 1 ein Magnet 9 befestigt, welches die Membran 4 nach oben zieht. Damit auf die Membran 4 eine magnetische Kraft ausgeübt werden kann, enthält diese ferromagnetische Stoffe. Die Membran 4 kann aber auch in geeigneter Weise Teile enthalten, die vom Magnet 9 angezogen werden.

Bei der Ausführung gemäss Fig. 6 wird die Membran 4 mechanisch mit Zugmitteln 5 nach oben gezogen und damit der Kallus K gedehnt. Die Zugmittel 5 weisen drehbar am Zahn 1 gelagerte Spulen 5 auf, auf die ein Faden 6 oder ein geeigneter Draht aufgewickelt ist, der an einem unteren Ende mit der Membran 4 verbunden ist. Die Membran 4 kann gleichzeitig mit mehreren solchen Spulen 5 und Fäden 6 gespannt werden. Grundsätzlich kann die Membran 4 aber auch mit geeigneten Mitteln von unten gestossen werden.

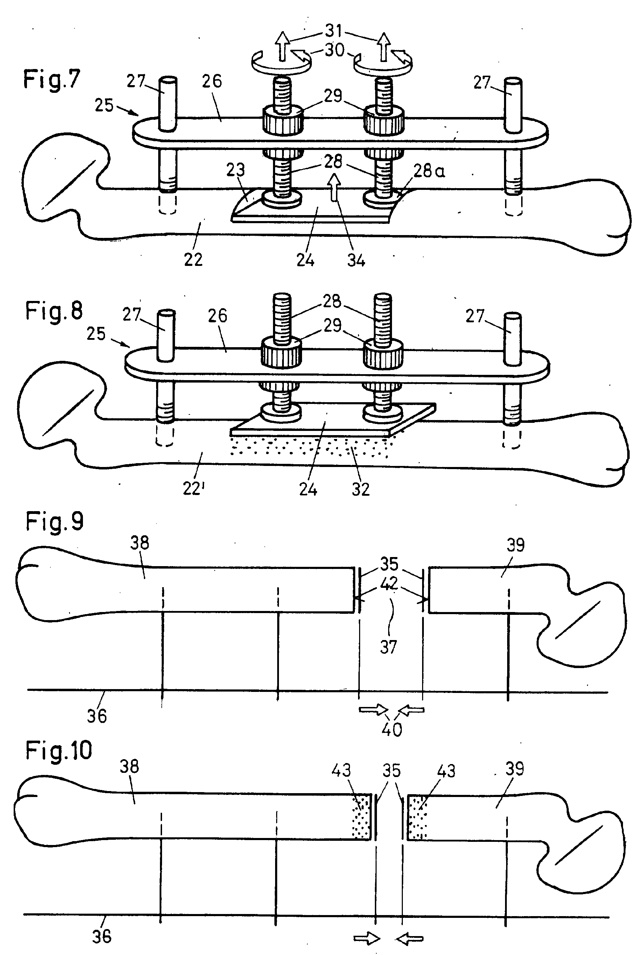

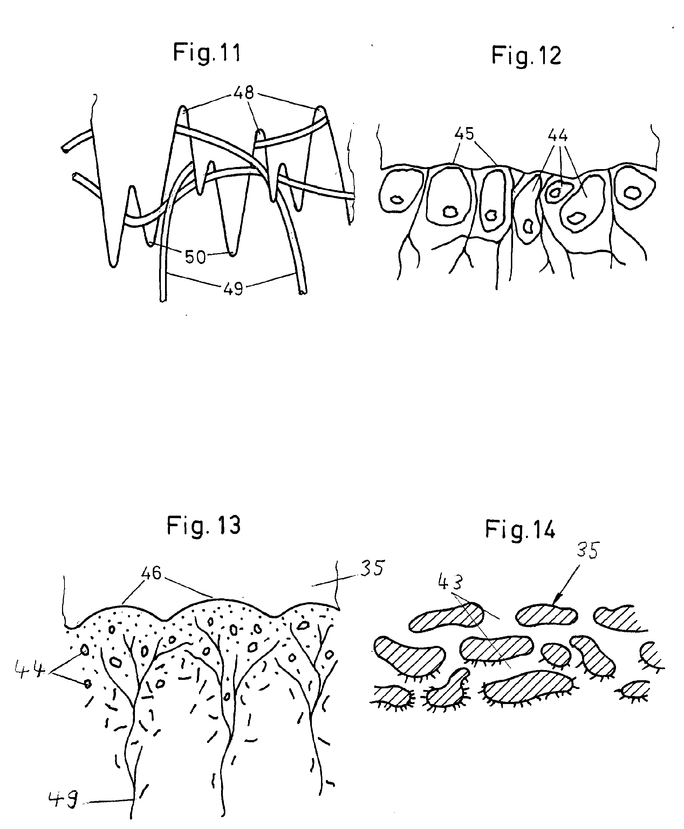

Die Figuren 7 und 8 zeigen ein weiteres Ausführungsbeispiel der erfindungsgemässen Vorrichtung, mit der ein Knochen 22 mittels Kallusdistraktion regeneriert wird. Der Knochen 22 weist eine Ausnehmung 23 auf, die beispielsweise durch Entfernen eines kranken Knochenteils oder durch einen Unfall entstanden ist. Durch diese Ausnehmung 23 wird der Knochen 22 wesentlich geschwächt und es ist mit der erfindungsgemässen Vorrichtung nun möglich, diese Ausnehmung 23 durch Kallusdistraktion mit stabilem Knochen zu regenerieren. Dazu wird eine Membran 24 in die Ausnehmung 23 eingesetzt. Die Membran 24 ist plattenförmig und so zugeschnitten, dass sie wie in Figur 7 ersichtlich, in die Ausnehmung 23 passt. Die Membran 24 ist beispielsweise aus Titan hergestellt und zur Versorgung des zu umschliessenden Knochengewebes wenigstens für Serum durchlässig, beispielsweise offenporig ausgebildet. Die Membran 24 ist so ausgebildet, dass sie strukturstabil ist. Sie kann insbesondere auf Zug belastet werden, ohne dass sie dadurch nachteilig deformiert wird. Schliesslich ist die Membran 24 an der dem Knochen 22 zugewandte Seite mit einer bioaktiven Schicht bzw. Oberfläche versehen, welche eine vergleichsweise schnelle und feste Verankerung des Knochens 22 an der Membran 24 gewährleistet. Die Verbindung erfolgt zwischen der Unterseite der Membran 24 und der dieser zugewandten Oberfläche 33 der Ausnehmung 23. Damit eine sichere Kallusdistraktion und der Aufbau von stabilem Knochengewebe möglich ist, ist die Unterseite der Membran 24 wie erwähnt bioaktiv ausgebildet. Insbesondere ist die Unterseite so strukturiert, dass sich Zellen und insbesondere Kollagenfasern an der Membran verankern können. Die Unterseite der Membran 24 weist zudem vorzugsweise Hydroxylgruppen und/oder Aminogruppen auf, welche die chemische Verbindung zu Eiweissmolekülen ermöglichen, welche zwischen der Membran 24 und dem Knochen 22 Brücken bilden. Diese Eiweissmoleküle bilden Ketten mit 1 bis 30 Kohlestoffatomen. Die zu verbindende Unterseite der Membran 24 weist vorzugsweise Mikrostrukturen, Mesostrukturen und Makrostrukturen auf. Die Mesostrukturen weisen gemäss Figur 12 Vertiefungen 45 von etwa 5-25 µ auf, an denen Zellen 44, insbesondere Osteoblasten andocken können. Im Makrobereich sind gemäss Figur 13 Vertiefungen 46 von etwa 100 bis 1'000 µ vorgesehen, in die insbesondere Kapillaren 47 hineinwachsen und sich darin verankern können. Im Mikrobereich sind gemäss Figur 11 Vertiefungen 48 vorgesehen, die in der Regel kleiner als etwa 5 µ sind und in die beispielsweise Fibrinstränge 49 und Eisweissmoleküle eingreifen und auch kovalente chemische Verbindungen -OH, -OH, OH entstehen können. Die genannten Vertiefungen 48 sind aufgrund der Offenporigkeit der Membran 24 zur Oberseite der Membran 24 offen und enthalten deshalb Serum, das durch die Membran 24 hindurch diffundieren kann. Wie die Figur 11 deutlich zeigt, sind in diesem Bereich Oberflächenspitzen 50 vorhanden, die senkrecht von der Membranoberfläche wegragen und die Verankerung insbesondere von Fibrinsträngen 49 verbessern. Die in die Ausnehmungen einwachsenden Zellen und Gewebe sind somit für den beim Gewebeaufbau besonders intensiven Stoffwechsel immer mit den notwendigen Stoffen versorgt.

Die Membran 24 wird in der in Figur 7 gezeigten Ausgangsstellung belassen, bis die Membran 24 mit dem Knochen 22 verbunden ist. Dann wird auf die Membran 24 in Figur 7 nach oben und damit vom Knochen 22 wegbewegt. Hierzu ist eine Zugvorrichtung 25 vorgesehen, welche eine Lagerplatte 26 besitzt, die mit zwei stangenförmigen Stützmitteln 27 am Knochen 22 befestigt ist. An der Lagerplatte 26 sind zwei Muttern 29 gelagert, in die jeweils eine Gewindestange 28 eingeschraubt ist. Diese Gewindestangen 28 sind an ihrem unteren Ende 28a drehbar mit der Membran 24 verbunden. Werden die beiden Muttern 29 in Richtung der Pfeile 30 gedreht, so wird auf die Membran 24 eine Zugkraft in Richtung des Pfeiles 34 ausgeübt. Dadurch wird die Membran 24 nach oben bewegt. Zwischen der Membran 24 und dem Knochen 22 wird neues Knochengewebe aufgebaut, das mit der Membran 24 verbunden ist. Die Geschwindigkeit, mit welcher die Membran 24 bewegt wird, beträgt typischerweise etwa 1 mm pro Tag.

Hat die Membran 24 die in Figur 8 gezeigte Position erreicht, so ist die Ausnehmung 23 mit neugebildetem Knochengewebe 32 aufgefüllt. Dieses neugebildete Knochengewebe 32 ist noch gallertartig weich, sodass die Membran 24 ohne weiteres entfernt werden kann. Das Knochengewebe 32 wandelt sich nun während einer anschliessenden Konsolidierungszeit in ein stabiles Knochengewebe um, sodass der regenerierte Knochen 22' die gewünschte Festigkeit erhält.

Die Figuren 9 und 10 zeigen eine weitere Variante einer erfindungsgemässen Vorrichtung für eine Kallusdistraktion. Diese Vorrichtung weist zwei Membranen 35 auf, die grundsätzlich gleich ausgebildet sein können wie die oben beschriebenen Membranen 4 und 24. Die beiden Membranen 35 sind in einem Zwischenraum 37 zwischen zwei Knochenteilen 38 und 39 eingesetzt und an einem Zugmittel 36 so befestigt, dass sie in den Richtungen der Pfeile 40 zueinander hin bewegt werden können. Die Membranen 35 werden in einer in Figur 9 gezeigten Ausgangsstellung so an Knochenflächen 42 angelegt, dass sich diese wie oben erläutert jeweils mit einer der Membranen 35 verbinden. Sind die Membranen 35 mit dem entsprechenden Knochenteil 38 bzw. 39 verbunden, werden sie wie erwähnt durch Ausnützung eines Zuges mit geeigneter Geschwindigkeit zueinander hin bewegt. Dadurch wird Knochengewebe 43 aufgebaut, wie in Figur 10 angedeutet. Sind die beiden Membranen 35 aneinander angelegt, sodass sie nicht weiter bewegt werden können, werden diese entfernt. Das gebildete Knochengewebe 43 ist noch weich und kann sich in der Konsolidierungsphase stabilisieren und zusammenwachsen, sodass schliesslich ein ganzer und belastbarer Knochen vorliegt.

Die Figuren 11 bis 14 zeigen schematisch die Oberflächenstruktur der Membran 35 in zunehmender Vergrösserung. Die Figur 11 zeigt die Oberflächenspitzen 50, an denen sich die Fibrinstränge 49 des zu regenerierenden Gewebes verankern können. Die Figuren 12 und 13 zeigen nochmals die Verankerung der Zellen 44 und Fibrinstränge 49 an der bioaktiven Oberfläche 15 der Membran und die Figur 14 die interkonnektierenden Poren 43, die den Durchgang von Serum zum Gewebe ermöglichen sowie die dem Gewebe bzw. vitalen Knochen zugewandte bioaktive Oberfläche 15. Die Oberflächenspitzen 50, die Vertiefungen 45, 46, 48, die oben erwähnten an der Oberfläche 15 angesiedelten Osteoblasten 18 sowie die an die Oberfläche 15 angeordneten und ebenfalls oben erwähnten Eiweissmoleküle, sind bevorzugte Mittel zur biologischen Verankerung des Gewebes bzw. des Knochens.

Die Membran 35 ist so ausgebildet, dass sie für die adhärenten Zellen lediglich einige Ankerpunkte bildet, den Flüssigkeitsaustausch im Umfeld dieser verankerten Zellen aber möglichst wenig behindert. Damit können nachteilige Konzentrationsgradienten an Nährstoffen und Metabolismen vermieden werden. Besonders geeignete Verfahren zur Herstellung von Oberflächen, insbesondere an einer Titanmembran, welche die genannten Bedingungen erfüllen, sind das Plasmaverfahren und die Silanisierung.

Mit dem Plasmaverfahren kann die Oberfläche der Membran abgetragen und modifiziert werden oder es lassen sich auf der Oberfläche dünne Schichten auftragen. Im Fall einer Membran aus Titan lässt sich beispielsweise die natürliche Oxidschicht verstärken oder es lassen sich chemische Gruppen aufbringen, die beispielsweise die Anbindung von Peptiden erforderlich sind. Bei der Plasmabehandlung wird die Oberfläche gezielt mit Ionen und Radikalen bombardiert, die genügend Energie tragen, um in den Oberflächen Bindungen zu brechen und neue zu knüpfen. Zur Strukturieren der Oberfläche kann diese beispielsweise mit einem Gewebe abgedeckt werden. Vor der Plasmabehandlung wird die Oberfläche mit einem geeigneten Lösungsmittel und/oder Ultraschall gereinigt. Die Behandlung erfolgt beispielsweisein in einem DINA3-Reaktor. Im Acrylsäurewasserstoffplasma wir hierbei während 30 Min. beschichtet, um die Oberfläche zu hydrophilieren. Die Leistung bei der Behandlung betrug dabei 80 W bei einem Prozessdruck von insgesamt 0,1 mbar. Auf die behandelte Oberfläche wird durch Carboxylabscheidung eine Schicht mit einer Dicke von beispielsweise 20 nm bis 280 nm gebildet. Wird bei der Plasmabehandlung ein Gewebe verwendet, so ist die Schichtdicke in dem abgedeckten Bereich geringer. Untersuchungen haben gezeigt, dass die Poren der Membran durch die aufgetragene Schicht nicht wesentlich verengt werden.

Bei der Silanisierung wird die Membran mit funktionellen Silanen, insbesondere Aminoalkyalkoxysilanen behandelt. Die Dichte der funktionellen Gruppen kann hierbei über die Reaktionsparameter kontrolliert werden. Die funktionalisierten Oberflächen können chemisch weiter modifiziert werden. Beispielsweise kann auf diese Weise die Hydrophilie eingestellt werden, indem positiv oder negativ geladene Grenzflächen generiert werden. Für die Silanisierung sind insbesondere Membrane aus Titan geeignet, da sich auf diesen in Gegenwart von Sauerstoff eine dünne festhaftende Schicht aus Titandioxid bildet, die stabile kovalente Bindungen ergibt.

Als weiteres Verfahren zur Behandlung der Membranoberfläche ist das an sich bekannte Layer-by-Layer geeignet. Dieses Verfahren beruht darauf, dass Festkörper an ihrer Oberfläche beim Kontakt mit Lösungsmitteln wie beispielsweise Wasser in der Regel Ladungen tragen. Bietet man solchen Oberflächen gegensätzlich geladene Polyionen an, so werden diese Ionen über elektrostatische Wechselwirkungen und entropische Effekte gebunden. Die daraus resultierende Oberfläche kann nun sukzessive mit weiteren jeweils gegensätzlich geladenen Polyionen modifiziert werden. Für die Beschichtung stehen eine ganze Reihe kommerziell erhältliche Polymere zur Verfügung. Es kann auch Polylisin eingesetzt werden, das in Monoschicht bereits als Adhäsionsvermittler bekannt ist. Durch dieses Verfahren werden besonders stabile und homogene Schichten erreicht.

Die Erfindung eignet sich auch für die Distraktion von Zellkulturen im Biolabor. Die hier geeigneten Distraktionsfrequenzen sind hier in der Regel allerdings wesentlich kleiner als bei der Kallusdistraktion. Diese kann beispielsweise einige µm pro Tag, beispielsweise 1 µm pro Tag betragen. Die Distraktionszeit ist in der Regel entsprechend länger und kann auch mehrere Tage oder Monate betragen.

Es können Zellen in vitro als auch in vivo distrahiert werden. Sie können zwischen zwei Membranen und damit in zwei Richtungen distrahiert werden. Zellen, die distrahiert werden, sind in der Regel hoch beansprucht. Solche Zellen können aufgrund der hohen Beanspruchung absterben. Um dies zu vermeiden, ist eine Konditionierung mit geeignetem Nährmedium zweckmässig.

### Bezugszeichenliste

- 1.: Zahn
- 2.: Knochen
- 3.: Gewebe
- 4.: Membran
- 5.: Zugmittel
5' Spulen
- 6.: Faden
- 7.: Zahnfleisch
- 8.: Paradontium
- 9.: Magnet
- 10.: Schicht
- 11.: Fibrinstränge
- 12.: Oberfläche
- 13.: Träger
- 14.: Durchgänge
- 15.: Oberfläche
- 16.: Mittel
- 17.: Osteoblasten
- 18.: Osteoblasten
- 19.: Osteoblasten
- 20.: Osteoblasten
- 21.: Oberfläche
- 22.: Knochen
- 23.: Ausnehmung
- 24.: Membran
- 25.: Zugmittel
- 26.: Lagerplatte
- 27.: Stützmittel
- 28.: Gewindestangen
28.a unteres Ende
- 29.: Mutter
- 30.: Pfeil
- 31.: Pfeil
- 32.: Knochengewebe
- 33.: Oberfläche
- 34.: Pfeil
- 35.: Membran
- 36.: Zugmittel
- 37.: Zwischenraum
- 38.: Knochenteil
- 39.: Knochenteil
- 40.: Pfeile
- 41.: Knochengewebe
- 42.: Kapillaren
- 43.: Interkonnektierende Poren
- 44.: Zellen
- 45.: Vertiefungen
- 46.: Vertiefungen
- 47.: Kapillaren
- 48.: Vertiefungen
- 49.: Fibrinstränge
- 50.: Oberflächenspitzen
- 51.: Mittel

- S: Schicht
- K: Kallus

## Patentansprüche

1. vorrichtung zur Bildung von Gewebe und Zellkulturen, insbesondere Knochenregeneration mittels Distraktion und insbesondere Kallusdistraktion, mit einer für den Austausch von Nährstoffen zumindest für Serum durchlässigen und strukturstabilen Membran (4, 4', 24, 35), die eine Oberfläche (15) aufweist, die mit Zellen bzw. mit einem zu regenerierenden Gewebe und insbesondere vitalen Knochen (2, 22, 38, 39) zu verbinden ist und mit Mitteln (9,5,6, 25, 36), mit denen die Membran (4, 4', 24, 35) zur Distraktion mit einer bestimmten Zugkraft und Geschwindigkeit bewegbar ist, **dadurch gekennzeichnet, dass** die genannte Membran (4, 4', 24, 35) an der den Zellen bzw. dem Gewebe bzw. Knochen zugewandten Oberfläche Mittel zur biologischen Verankerung und Haftung für Zellen bzw. Gewebe bzw. Knochenzellen aufweist.

2. Vorrichtung nach Anspruch 1, **dadurch gekennzeichnet, dass** die Mittel (16) zur biologischen Verankerung von Zellen und insbesondere Knochenzellen Eiweissmoleküle und/oder Osteoblasten (17) und/oder interkonnektierende Poren aufweist.

3. Vorrichtung nach Anspruch 2, **dadurch gekennzeichnet, dass** die Eiweissmoleküle kurzkettige Moleküle sind.

4. Vorrichtung nach einem der Ansprüche 1 bis 3, **dadurch gekennzeichnet, dass** die Mittel zur biologischen Verankerung von Zellen und insbesondere Gewebezellen oder Knochenzellen sich im Wesentlichen über die zu verankernde gesamte Oberfläche (15) der Membran (4, 4', 24, 35) erstrecken.

5. Vorrichtung nach einem der Ansprüche 1 bis 4, **dadurch gekennzeichnet, dass** auf der genannten Oberfläche (15) der Membran (4, 4', 24, 35) Osteoblasten (18) angesiedelt sind, die an den genannten Mitteln (16) zur biologischen Haftung verankert sind.

6. Vorrichtung nach Anspruch 5, **dadurch gekennzeichnet, dass** die Osteoblasten (18) an kurzkettigen Eiweissmolekülen durch Adhäsion verankert sind.

7. Vorrichtung nach einem der Ansprüche 1 bis 7, **dadurch gekennzeichnet, dass** die Mittel (9, 5, 6, 25, 36) zum Bewegen der Membran (4, 4', 24, 35) mechanische Zug- oder Druckmittel sind.

8. Vorrichtung nach einem der Ansprüche 1 bis 6, **dadurch gekennzeichnet, dass** die Mittel (9) zum Bewegen der Membran (4, 4', 24, 25) wenigstens einen Magneten (9) aufweisen, mit dem auf die Membran (4,4') eine Kraft ausgeübt wird.

9. Membran für die Distraktion von Zellen bzw. Gewebe und insbesondere die Kallusdistraktion, wobei diese für den Austausch von Nährstoffen durchlässig ist und eine Oberfläche (15) aufweist, die an zu bildende Zellen bzw. Gewebe und insbesondere regenerierende Knochen (2, 22, 38, 39) anzulegen und für die Distraktion zu bewegen ist, **dadurch gekennzeichnet, dass** die genannte Oberfläche (15) Mittel (16) zur biologischen Haftung von Zellen und insbesondere von Osteoblasten (18) und/oder zum Einwachsen von Gefässen aufweist.

10. Membran nach Anspruch 9, **dadurch gekennzeichnet, dass** sie strukturstabil ist, so dass sie im Wesentlichen ohne Deformation zur Dehnung eines Kallus (K) bewegbar ist.

11. Membran nach Anspruch 9 oder 10, **dadurch gekennzeichnet, dass** sie einen Träger (13) aufweist, der mit einer Mehrzahl von Durchgängen (14) versehen ist.

12. Membran nach Anspruch 11, **dadurch gekennzeichnet, dass** der Träger (13) aus Metall, vorzugsweise Titan hergestellt ist.

13. Membran nach einem der Ansprüche 9 bis 11, **dadurch gekennzeichnet, dass** der Träger (13) eine offenporige Metallplatte oder ein Gitter oder Netz ist, und dass auf den Träger (13) eine für Nährstoffe durchlässig ist.

14. Membran nach Anspruch 13, **dadurch gekennzeichnet, dass** die genannten Mittel (16) zur biologischen Haftung von Osteoblasten (17, 18) auf dem Träger (13) als auch auf der genannten Schicht (10) angeordnet sind.

15. Membran nach einem der Ansprüche 9 bis 14, **dadurch gekennzeichnet, dass** die genannten Mittel (16) zur biologischen Haftung von Osteoblasten (17, 18) organische Moleküle sind.

16. Membran nach Anspruch 15, **dadurch gekennzeichnet, dass** die organischen Moleküle Eiweissmoleküle sind.

17. Membran nach Anspruch 16, **dadurch gekennzeichnet, dass** die Eiweissmoleküle kurzkettig sind.

18. Membran nach einem der Ansprüche 9 bis 17, **dadurch gekennzeichnet, dass** die zu verbindende Oberfläche zur biologischen Bindung des Knochengewebes mit Hydroxylgruppen und/oder Aminogruppen versehen ist.

19. Membran nach einem der Ansprüche 9 bis 18, **dadurch gekennzeichnet, dass** die zu verbindende Oberfläche eine mikrostrukturelle, mesostrukturelle und makrostrukturelle Vertiefungen mit folgenden Dimensionsbereichen aufweist:
| | |
|---|---|
| mikrostrukturell | < 5µm |
| mesostrukturell | 5 - 25µm |
| maktrostrukturell | 100 - 1'000 µm |

20. Membran nach einem der Ansprüche 9 bis 19, **dadurch gekennzeichnet, dass** die zu verbindende Oberfläche durch Sandstrahlen strukturiert ist.

21. Verfahren zum Bilden von Gewebe und Zellkulturen insbesondere Geweberegeneration und insbesondere Knochenregeneration durch Distraktion und insbesondere Kallusdistraktion, wobei eine für den Austausch von Nährstoffen durchlässige Membran (4, 4') mit den zu bildenden Zellen insbesondere zu regenerierenden Gewebe bzw. vitalen Knochen (2) verbunden und zur Distraktion bewegt wird, **dadurch gekennzeichnet, dass** eine den Zellen bzw. Gewebe bzw. Knochen (2) zuzuwendende Oberfläche (15) der Membran (4,4') Mittel (16) zur biologischen Haftung von Osteoblasten (17,18) aufweist, dass die Membran (4, 4') an die zu regenerierende Stelle des Gewebes bzw. vitalen Knochens (2) angelegt wird, und dass die Membran (4,4') für die Distraktion mit einer bestimmten Geschwindigkeit von den Zellen bzw. vom Gewebe bzw. vitalen Knochen (2) wegbewegt wird.

22. Verfahren nach Anspruch 18, **dadurch gekennzeichnet, dass** die Membran (4, 4') vor dem Anlegen an die Zellen bzw. das Gewebe bzw. an den vitalen Knochen (2) auf der an den vitalen Knochen (2) anzulegenden Oberfläche (15) mit Osteoblasten (18) versehen wird.

23. Verfahren nach Anspruch 18 oder 19, **dadurch gekennzeichnet, dass** die Membran (4, 4') mittels wenigstens eines Magneten (9) oder mechanischen Zugmitteln (5, 6) mit einer Geschwindigkeit von 0,5 bis 2 Millimeter pro Tag vom Gewebe bzw. vitalen Knochen (2) weg bewegt wird.

24. Verfahren nach einem der Ansprüche 21 bis 23, **dadurch gekennzeichnet, dass** die Zellkultur bzw. das Gewebe ein solches ist, bei dem Zellproliferation und Differenzierung durch biomechanische Reizübertragung auf das Zytoskelett ausgelöst und Gewebewachstum bzw. -regeneration erzielbar ist.

25. verfahren zur Herstellung einer Membran gemäss Anspruch 9, **dadurch gekennzeichnet, dass** wenigstens eine Oberfläche der Membran durch Plasmabehandlung durch Silanisierung oder durch ein "layer-by-layer"-Verfahren behandelt wird.
